# EUROPEAN PATENT APPLICATION

(11) **EP 4 807 771 A1**
(43) Date of publication of application: **16.09.2026**
(21) Application number: 23961362.3
(22) Date of filing: 11.12.2023
(51) Int. Cl.: H01G 4/30

(54) **MULTILAYER CERAMIC CAPACITOR**

(71) Applicant: Murata Manufacturing Co., Ltd., Nagaokakyo-shi, Kyoto 617-8555 (JP)
(72) Inventor: SUGITA, Hiroaki, Nagaokakyo-shi, Kyoto 617-8555 (JP)
(74) Representative: Stöckeler, Ferdinand
(86) International application number: PCT/JP2023/044320
(87) International publication number: WO 2025/126293

(57) **Abstract**

Provided is a multilayer ceramic capacitor in which the insulation properties of the entire dielectric layer are increased and for which the reliability of the multilayer ceramic capacitor can be improved. This multilayer ceramic capacitor comprises: a laminate that includes a plurality of laminated dielectric layers and that has a first main surface and a second main surface which face each other in the lamination direction of the plurality of dielectric layers, a first lateral surface and a second lateral surface which face each other in the width direction orthogonal to the lamination direction, and a first end surface and a second end surface which face each other in the length direction orthogonal to the lamination direction and the width direction; a first external electrode that has a first internal electrode layer disposed above the plurality of dielectric layers and exposed to the first end surface, a second internal electrode layer disposed above the plurality of dielectric layers and exposed to the second end surface, a substrate electrode layer disposed above the first end surface, and a plating layer disposed above the substrate electrode layer; and a second external electrode that has a substrate electrode layer disposed above the second end surface, and a plating layer disposed above the substrate electrode layer. Dielectric particles are disposed in the dielectric layers. The dielectric particles include Mn and Zr, and in the dielectric particles, the atomic ratio (Mn/Zr) of Mn to Zr is 0.60 to 0.80.

## Description

### TECHNICAL FIELD

The present invention relates to a multilayer ceramic capacitor.

### BACKGROUND ART

Conventionally, multilayer ceramic capacitors have been known. Typically, a multilayer ceramic capacitor includes a sintered ceramic body composed of a dielectric ceramic such as barium titanate (BaTiO₃) or the like. The sintered ceramic body includes therein a plurality of internal electrodes placed over each other with a dielectric layer interposed therebetween. The sintered ceramic body has external electrodes formed on opposite end surfaces thereof and electrically connected to the internal electrodes (for example, Patent Document 1).

### Citation List

### Patent Documents

Patent Document 1: Japanese Unexamined Patent Application, Publication No. H8-306580

### DISCLOSURE OF THE INVENTION

### Problems to be Solved by the Invention

However, in a general multilayer ceramic capacitor as disclosed in Patent Document 1, an insufficient amount of Mn is solid-solved in the dielectric particles in the dielectric layers, and Mn is likely to segregate at the grain boundaries of the dielectric particles. Because a Mn segregation layer is a low-resistance layer, there is a disadvantage that the insulating properties of the overall dielectric layers are reduced, deteriorating the reliability of the multilayer ceramic capacitor.

Therefore, it is a main object of the present invention to provide a multilayer ceramic capacitor in which the insulating properties of overall dielectric layers are enhanced and the reliability of which can be improved.

### Means for Solving the Problems

A multilayer ceramic capacitor according to the present invention includes: a multilayer body including a plurality of dielectric layers that are laminated, the multilayer body having a first main surface and a second main surface opposed to each other in a lamination direction of the plurality of dielectric layers, a first side surface and a second side surface opposed to each other in a width direction orthogonal to the lamination direction, and a first end surface and a second end surface opposed to each other in a length direction orthogonal to the lamination direction and the width direction; first internal electrode layers respectively disposed on the plurality of dielectric layers and exposed at the first end surface; second internal electrode layers respectively disposed on the plurality of dielectric layers and exposed at the second end surface; a first external electrode including a base electrode layer disposed on the first end surface, and a plating layer disposed on the base electrode layer on the first end surface; and a second external electrode including a base electrode layer disposed on the second end surface, and a plating layer disposed on the base electrode layer on the second end surface. The dielectric layers include particles arranged therein, the dielectric particles contain Mn and Zr, and an atomic ratio of Mn to Zr (Mn/Zr) in the dielectric particles is 0.60 or more and 0.80 or less.

According to the multilayer ceramic capacitor of the present invention, the feature in which the atomic ratio of Mn to Zr (Mn/Zr) in the dielectric particles is 0.60 more and 0.80 or less makes it possible to ensure a suitable amount of Mn solid-solved in the dielectric particles and to reduce an amount of Mn segregation at the grain boundaries between the dielectric particles, whereby the insulating properties of the overall dielectric layers are enhanced, allowing for improvement in the reliability of the multilayer ceramic capacitor.

### Effects of the Invention

The present invention enables enhancement of insulating properties of the overall dielectric layers and improvement in the reliability of the multilayer ceramic capacitor.

The aforementioned object of the present invention, other objects thereof, features thereof, and advantages thereof will become clearer from the description of embodiments of the invention provided below with reference to the drawings.

### BRIEF DESCRIPTION OF THE DRAWINGS

FIG. 1 is an external perspective view illustrating an example of a multilayer ceramic capacitor according to an embodiment of the present invention;
FIG. 2 is a front view illustrating an example of a multilayer ceramic capacitor according to the embodiment of the present invention;
FIG. 3 is a plan view illustrating an example of a multilayer ceramic capacitor according to the embodiment of the present invention;
FIG. 4 is a schematic cross-sectional view taken along line IV-IV in FIG. 1;
FIG. 5 is a schematic cross-sectional view taken along line V-V in FIG. 1;
FIG. 6 is a schematic cross-sectional view taken along line VI-VI in FIG. 4;
FIG. 7A is a cross-sectional view illustrating a structure in which a counter electrode portion of an internal electrode layer of a multilayer ceramic capacitor according to an embodiment of the present invention is divided into two;
FIG. 7B is a cross-sectional view illustrating a structure in which a counter electrode portion of an internal electrode layer of a multilayer ceramic capacitor according to an embodiment of the present invention is divided into three; and
FIG. 7C is a cross-sectional view illustrating a structure in which a counter electrode portion of an internal electrode layer of a multilayer ceramic capacitor according to the present invention is divided into four.

### PREFERRED MODE FOR CARRYING OUT THE INVENTION

The following describes one example of a multilayer ceramic capacitor according to an embodiment of the present invention.

### 1. Multilayer Ceramic Capacitor

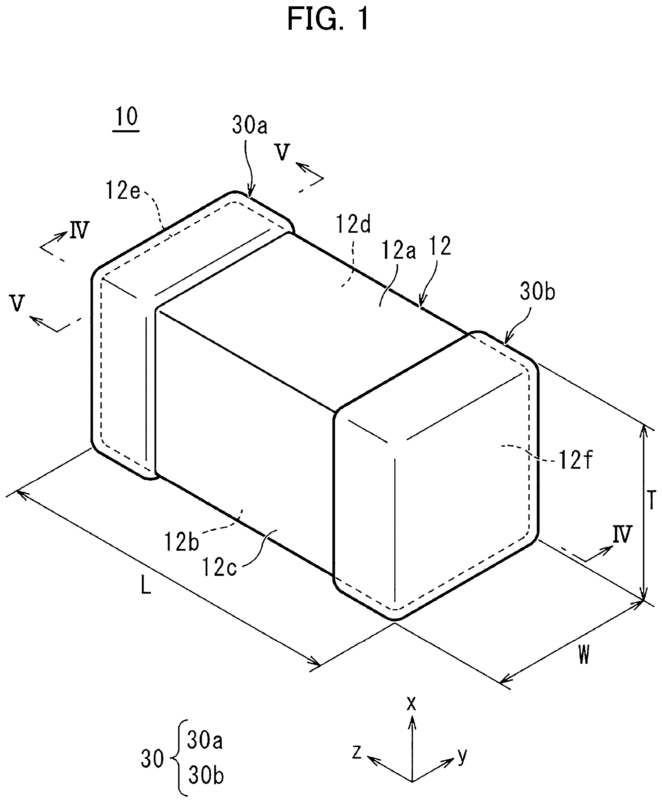

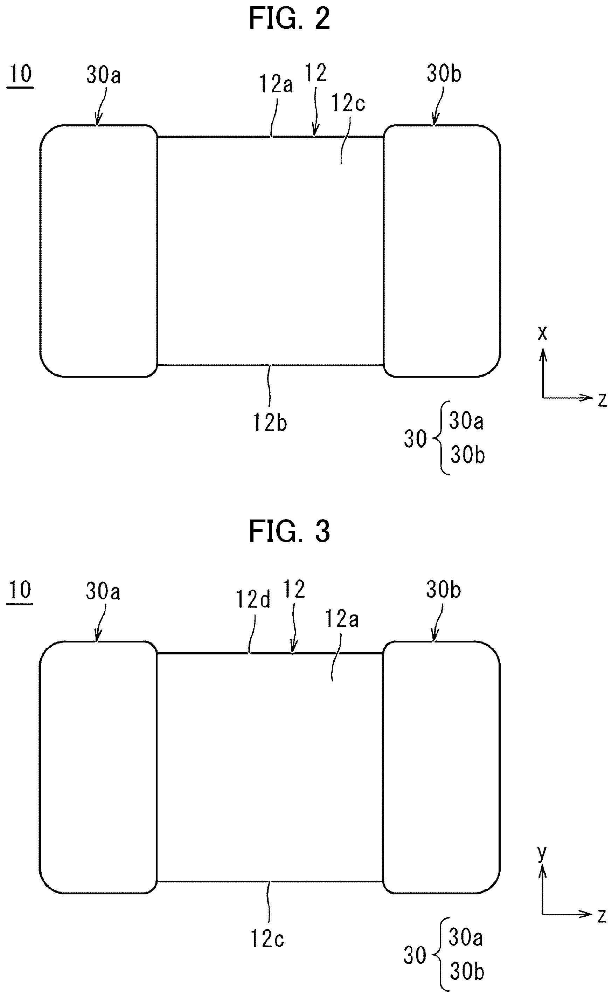

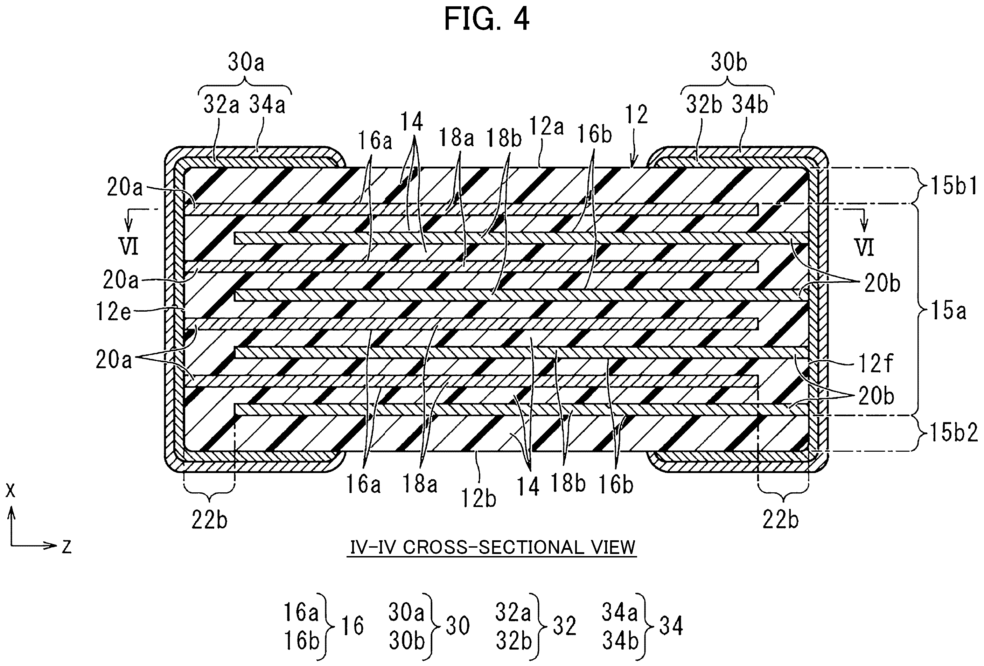

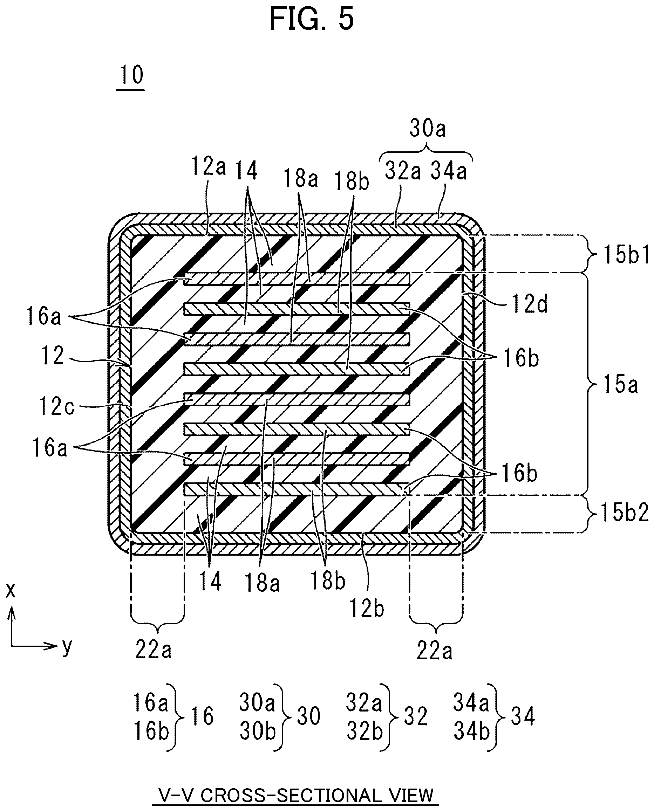

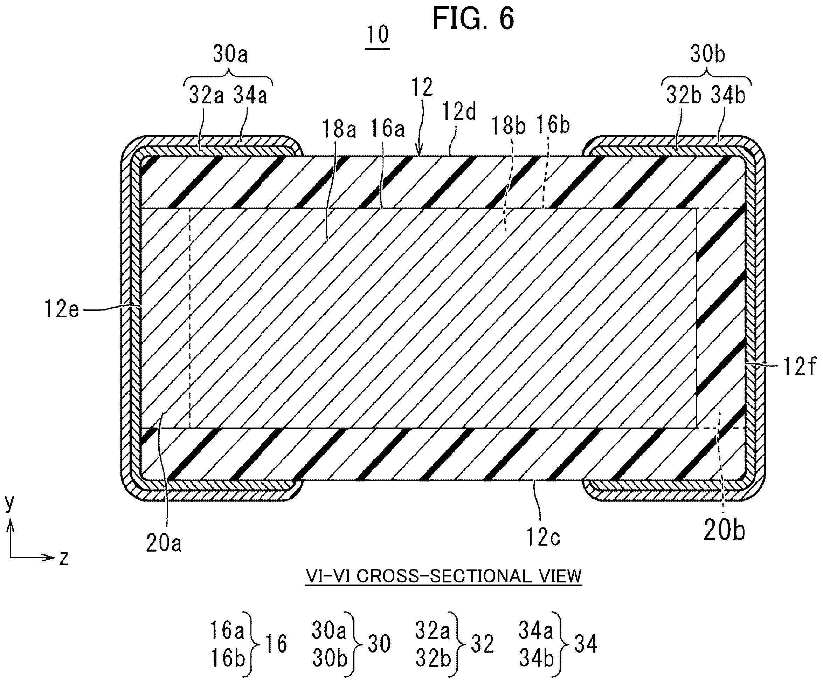

One example of a multilayer ceramic capacitor according to an embodiment of the present invention will be described. FIG. 1 is an external perspective view illustrating the one example of the multilayer ceramic capacitor according to the embodiment of the present invention. FIG. 2 is a front view illustrating the one example of the multilayer ceramic capacitor according to the embodiment of the present invention. FIG. 3 is a plan view illustrating the one example of the multilayer ceramic capacitor according to the embodiment of the present invention. FIG. 4 is a schematic cross-sectional view taken along line IV-IV in FIG. 1. FIG. 5 is a schematic cross-sectional view taken along line V-V in FIG. 1. FIG. 6 is a schematic cross-sectional view taken along line VI-VI in FIG. 4.

The multilayer ceramic capacitor 10 includes a multilayer body 12 and external electrodes 30. The multilayer body 12 is composed of an inner layer portion 15a in which a plurality of dielectric layers 14 and a plurality of internal electrode layers 16 are alternately laminated and which develops capacitance, and a first outer layer portion 15b1 and a second outer layer portion 15b2 which are respectively disposed adjacent to an upper main surface and a lower main surface so as to sandwich the inner layer portion 15a therebetween.

Hereinafter, the multilayer body 12, the internal electrode layers 16, and the external electrodes 30 will be described in this order.

### (Multilayer Body)

The multilayer body 12 includes a plurality of laminated dielectric layers 14 and a plurality of laminated internal electrode layers 16. Further, the multilayer body 12 has a first main surface 12a and a second main surface 12b opposed to each other in a height direction x that is a lamination direction of the plurality of dielectric layers 14, a first side surface 12c and a second side surface 12d opposed to each other in a width direction y orthogonal to the height direction x, and a first end surface 12e and a second end surface 12f opposed to each other in a length direction z orthogonal to the height direction x and the width direction y. The length direction z is also defined as an L direction that connects the first end surface 12e and the second end surface 12f. The width direction y is also defined as a W direction that connects the first side surface 12c and the second side surface 12d. The height direction x is also defined as a T direction that connects the first main surface 12a and the second main surface 12b.

The multilayer body 12 has a rectangular parallelepiped shape. The term "rectangular parallelepiped shape" encompasses a rectangular parallelepiped having rounded corners and ridges. The corner is a portion where three adjacent surfaces of the multilayer body 12 meet each other, and the ridge is a portion where two adjacent surfaces of the multilayer body 12 meet each other. That is, a member having a "rectangular parallelepiped shape" refers to a general member having a first main surface 12a, a second main surface 12b, a first side surface 12c, a second side surface 12d, a first end surface 12e, and a second end surface 12f.

The first main surface 12a and the second main surface 12b, the first side surface 12c and the second side surface 12d, and the first end surface 12e and the second end surface 12f may have projections and depressions or the like formed in a portion or the entirety thereof.

In the multilayer body 12, the plurality of substantially rectangular first internal electrode layers 16a and substantially rectangular second internal electrode layers 16b, which will be described later, are alternately arranged at equal intervals in the thickness direction T. The first internal electrode layers 16a and the second internal electrode layers 16b are each substantially parallel to the first main surface 12a and the second main surface 12b. The first internal electrode layer 16a and the second internal electrode layer 16b face each other with the dielectric layer 14 interposed therebetween in the thickness direction T.

As illustrated in FIGS. 4 and 5, the multilayer body 12 includes: the inner layer portion 15a in which the plurality of internal electrode layers 16 face each other in the height direction x, which connects the first main surface 12a and the second main surface 12b; the first outer layer portion 15b1 composed of two or more dielectric layers 14 sandwiched between the first main surface 12a and the internal electrode layer 16 closest to the first main surface 12a; and the second outer layer portion 15b2 composed of two or more dielectric layers 14 sandwiched between the second main surface 12b the internal electrode layer 16 closest to the second main surface 12b.

The first outer layer portion 15b1 is adjacent to the first main surface 12a of the multilayer body 12 and is an aggregate of two or more dielectric layers 14 sandwiched between the first main surface 12a and the internal electrode layer 16 closest to the first main surface 12a.

The second outer layer portion 15b2 is adjacent to the second main surface 12b of the multilayer body 12 and is an aggregate of two or more dielectric layers 14 sandwiched between the second main surface 12b and the internal electrode layer 16 closest to the second main surface 12b.

The inner layer portion 15a is a region sandwiched between the first outer layer portion 15b1 and the second outer layer portion 15b2.

The number of the laminated dielectric layers 14 is not particularly limited, but is preferably 10 or more and 2000 or less including the first outer layer portion 15b1 and the second outer layer portion 15b2. The thickness of each dielectric layer 14 is preferably about 0.5 µm or more and about 10 µm or less, for example.

The dielectric layer 14 is constituted of a ceramic material, an example of which is a dielectric material. As the dielectric material, a dielectric ceramic containing barium titanate (BaTiO₃) as a main component can be used, for example. Further, in accordance with desired characteristics of the multilayer body, a subcomponent may be added at a smaller content than the main component. Examples of the subcomponent include a Mn compound, an Fe compound, a Cr compound, a Co compound, a Ni compound, and the like.

Further, it is preferable that the dielectric layers 14 include dielectric particles arranged therein, the dielectric particles contain at least Mn and Zr, and an atomic ratio of Mn to Zr (Mn/Zr) in the dielectric particles be 0.60 or more and 0.80 or less. In general, in a case where Mn segregates at the grain boundaries between dielectric particles, the Mn segregation layer having lower resistance than ceramic causes deterioration of the reliability of the multilayer ceramic capacitor 10 (which is determined by a highly accelerated life test (HALT)). However, the above configuration makes it possible to ensure a suitable amount of Mn solid-solved in the dielectric particles and to reduce an amount of Mn segregation at the grain boundaries between the dielectric particles, whereby the reliability (determined by the HALT) of the multilayer ceramic capacitor 10 can be improved.

In a case where the atomic ratio (Mn/Zr) is less than 0.60, the reliability (determined by the HALT) of the multilayer ceramic capacitor 10 deteriorates. In a case where the atomic ratio (Mn/Zr) is more than 0.80, a larger amount of heat is required to solid-solve Mn into the particles, and a coverage by the internal electrode layers 16 decreases.

It is preferable that the dielectric particles in the dielectric layers 14 have a perovskite structure including Ba, Sr, Zr, Ti, and Hf and optionally including Ca, and further contain at least one of Mn or Si. Selecting the foregoing materials and compositions provides an advantage that good temperature characteristics can be ensured.

It is preferable that the dielectric layers 14 further include at least La. Due to this configuration, La is solid-solved at the A site of the dielectric material so that lattice distortion occurs, and the amount of Mn solid-solved at the B site of the dielectric material increases. As a result, the solid-solving of Mn in the dielectric particles is further promoted, allowing for further improvement in the reliability (determined by the HALT) of the multilayer ceramic capacitor 10.

More preferably, the content of La is 0.3 mol or more and 1.0 mol or less. This configuration is adapted because in a case where the content of La is less than 0.3 mol, the effect of improving the (HALT) of the multilayer ceramic capacitor 10 is reduced. In a case where the content of La is more than 1.0 mol, the temperature characteristics deteriorate.

It is more preferable for the dielectric layers 14 that a ratio represented as (the number of moles of Ba + the number of moles of Ca + the number of moles of Sr + the number of moles of La)/(the number of moles of Zr + the number of moles of Ti + the number of moles of Hf) be 1.00 or more and 1.03 or less.

Here, a method of measuring the atomic ratio (Mn/Zr) will be described. Mapping is performed by TEM analysis (TEM: Transmission Electron Microscope). A sample for TEM analysis is a thin sample cut out using a Ga ion beam. The thin sample is subjected to TEM-EDX (EDX: Energy Dispersive X-ray Spectroscopy) to perform quantitative point analysis of the interiors of ceramic grains and grain boundaries between the ceramic grains. An atomic percentage of Mn and an atomic percentage of Zr are each calculated as an average of five points per one grain boundary, and the atomic percentages of three grain boundaries are averaged, thereby calculating the atomic ratio (Mn/Zr).

Further, a method of measuring a content of La will be described. To measure the content of La, a dielectric sample is dissolved in a solution by a pretreatment, and an amount of La contained in the sample is analyzed by ICP-MS (inductively coupled plasma mass spectrometry). The content of La is calculated relative to the total amount using the average of n=2.

### (Internal Electrode Layer)

As illustrated in FIGS. 4 and 5, the internal electrode layers 16 include first internal electrode layers 16a and second internal electrode layers 16b. The first internal electrode layers 16a and the second internal electrode layers 16b are alternately laminated with the dielectric layers 14 interposed therebetween.

Each first internal electrode layer 16a is disposed on a surface of the corresponding dielectric layer 14. Each first internal electrode layer 16a includes a first counter electrode portion 18a facing the second internal electrode layer 16b, and a first extension electrode portion 20a disposed in one end portion of the first internal electrode layer 16a and extending from the first counter electrode portion 18a to reach the first end surface 12e of the multilayer body 12. The first extension electrode portion 20a has an end extended toward the first end surface 12e to be exposed. Specifically, the end of the first extension electrode portion 20a is located slightly inwardly with respect to the first end surface 12e. The first extension electrode portion 20a is not exposed at the first main surface 12a, the second main surface 12b, the first side surface 12c, or the second side surface 12d.

Although the first counter electrode portion 18a of each first internal electrode layer 16a may have any shape without particular limitation, it preferably has a rectangular shape in plan view. Nevertheless, the first counter electrode portion 18a may have a shape with rounded corner portions in plan view or a shape with oblique corner portions (tapered shape) in plan view.

Although the first extension electrode portion 20a of each first internal electrode layer 16a may have any shape without particular limitation, it preferably has a rectangular shape in plan view. Nevertheless, the first extension electrode portion 20a may have a shape with rounded corner portions in plan view or a shape with oblique corner portions (tapered shape) in plan view. Alternatively, it may have a tapered shape that is inclined as approaching either side in plan view.

Each second internal electrode layer 16b is disposed on a surface of the corresponding dielectric layer 14 that is different from the dielectric layer 14 on which the first internal electrode layer 16a is disposed. Each second internal electrode layer 16b includes a second counter electrode portion 18b facing the first internal electrode layer 16a, and a second extension electrode portion 20b disposed in one end portion of the second internal electrode layer 16b and extending from the second counter electrode portion 18b to reach the second end surface 12f of the multilayer body 12. The second extension electrode portion 20b has an end extended toward the second end surface 12f to be exposed. Specifically, the end of the second extension electrode portion 20b is located slightly inwardly with respect to the second end surface 12f. The second extension electrode portion 20b is not exposed at the first main surface 12a, the second main surface 12b, the first side surface 12c, or the second side surface 12d.

Although the second counter electrode portion 18b of each second internal electrode layer 16b may have any shape without particular limitation, it preferably has a rectangular shape in plan view. Nevertheless, the second counter electrode portion 18b may have a shape with rounded corner portions in plan view or a shape with oblique corner portions (tapered shape) in plan view.

Although the second extension electrode portion 20b of each second internal electrode layer 16b may have any shape without particular limitation, it preferably has a rectangular shape in plan view. Nevertheless, the second extension electrode portion 20b may have a shape with rounded corner portions in plan view or a shape with oblique corner portions (tapered shape) in plan view. Alternatively, it may have a tapered shape that is inclined as approaching either side in plan view.

The multilayer body 12 includes side portions 22a (hereinafter each may be referred to as a "W gap"). One of the side portions 22a is formed between the first side surface 12c and one end in the width direction y of each first counter electrode portion 18a and between the first side surface 12c and one end in the width direction y of each second counter electrode portion 18b, and the other of the side portions 22a is formed between the second side surface 12d and the other end in the width direction y of each first counter electrode portion 18a and between the second side surface 12d and the other end in the width direction y of each second counter electrode portion 18b. The multilayer body 12 further includes end portions 22b (hereinafter each may be referred to as an "L gap"). One of the end portions 22b is formed between the second end surface 12f and the end of each first internal electrode layer 16a opposite to the first extension electrode portion 20a, and the other of the end portions 22b is formed between the first end surface 12e and the end of each second internal electrode layer 16b opposite to the second extension electrode portion 20b.

The number of laminated internal electrode layers 16 is not particularly limited, but is preferably 10 or more and 2000 or less. The thickness of each internal electrode layer 16 is preferably about 0.2 µm or more and about 2.0 µm or less.

The internal electrode layers 16 can be constituted of, for example, an appropriate conductive material, examples of which include metals such as Ni, Cu, Ag, Pd, and Au, and an alloy containing at least one of these metals such as a Ag-Pd alloy. The metal constituting the internal electrode layers 16 forms a compound with a metal constituting a conductive filler contained in a conductive resin layer (described later) of the external electrodes 30.

Preferably, the thickness of each of the first internal electrode layer 16a and the second internal electrode layer 16b is about 0.2 µm or more and about 2.0 µm or less, for example.

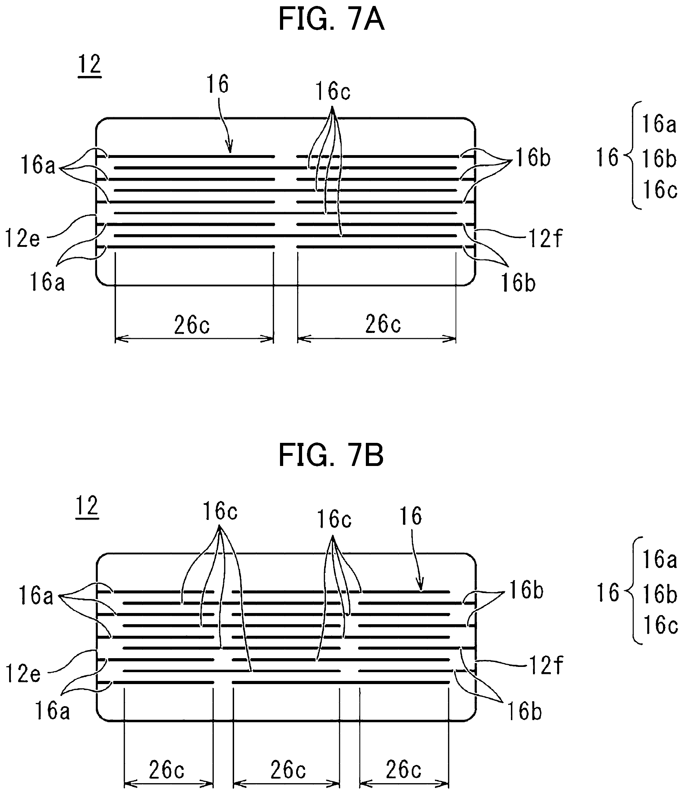

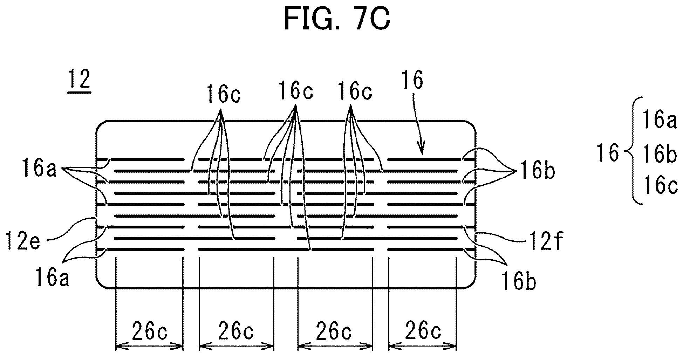

Referring to FIG. 7, the multilayer body 12 may have a structure in which floating internal electrode layers 16c that are not extended toward either the first end surface 12e or the second end surface 12f are arranged in addition to the first internal electrode layers 16a and the second internal electrode layers 16b, and in which a counter electrode portion 26c is divided into two or more segments due to the floating internal electrode layers 16c. For example, the multilayer body may have a two-segment structure illustrated in FIG. 7A, a three-segment structure illustrated in FIG. 7B, or a foursegment structure illustrated in FIG. 7C, and it goes without saying that it may have a four or more-segment structure. By adopting the structure in which the counter electrode portion 26c is divided into two or more segments, a plurality of capacitor components are formed between the first internal electrode layers 16a, the second internal electrode layers 16b, and the floating internal electrode layers 16c that face each other, and these capacitor components are connected in series. As a result, a low voltage is applied to each of the capacitor components, thereby allowing the multilayer ceramic capacitor 10 to have a high breakdown voltage.

Similarly to the first internal electrode layers 16a and the second internal electrode layers 16b, the floating internal electrode layers 16c can be composed of, for example, an appropriate conductive material, examples of which include metals such as Ni, Cu, Ag, Pd and Au, and an alloy containing at least one of these metals such as a Ag-Pd alloy.

As illustrated in FIGS. 1 to 3, the external electrodes 30 are disposed on and around the first end surface 12e and the second end surface 12f of the multilayer body 12.

Each external electrode 30 includes a base electrode layer 32 containing a metal component and glass, and preferably includes a plating layer 34 disposed on a surface of the base electrode layer 32.

The external electrodes 30 include a first external electrode 30a and a second external electrode 30b.

The first external electrode 30a is connected to the first internal electrode layers 16a and is disposed on at least the surface of the first end surface 12e. The first external electrode 30a extends from the first end surface 12e of the multilayer body 12 to be also disposed on a portion of the first main surface 12a, a portion of the second main surface 12b, a portion of the first side surface 12c, and a portion of the second side surface 12d. In this case, the first external electrode 30a is electrically connected to the first extension electrode portions 20a of the first internal electrode layers 16a.

The second external electrode 30b is connected to the second internal electrode layers 16b and is disposed on at least the surface of the second end surface 12f. The second external electrode 30b extends from the second end surface 12f of the multilayer body 12 to be also disposed on a portion of the first main surface 12a, a portion of the second main surface 12b, a portion of the first side surface 12c, and a portion of the second side surface 12d. In this case, the second external electrode 30b is electrically connected to the second extension electrode portions 20b of the second internal electrode layers 16b.

In the multilayer body 12, the first counter electrode portions 18a of the first internal electrode layers 16a and the second counter electrode portions 18b of the second internal electrode layers 16b face each other with the dielectric layers 14 interposed therebetween, thereby producing capacitance. As a result, capacitance can be obtained between the first external electrode 30a to which the first internal electrode layers 16a are connected and the second external electrode 30b to which the second internal electrode layers 16b are connected, whereby the characteristics of the capacitor are developed.

The base electrode layer 32 includes a first base electrode layer 32a and a second base electrode layer 32b.

The first base electrode layer 32a is connected to the first internal electrode layers 16a and is disposed on the surface of the first end surface 12e. The first base electrode layer 32a extends from the first end surface 12e to be also disposed on a portion of the first main surface 12a, a portion of the second main surface 12b, a portion of the first side surface 12c, and a portion of the second side surface 12d. In this case, the first base electrode layer 32a is electrically connected to the first extension electrode portions 20a of the first internal electrode layers 16a.

The second base electrode layer 32b is connected to the second internal electrode layers 16b and is disposed on the surface of the second end surface 12f. The second base electrode layer 32b extends from the second end surface 12f to be also disposed on a portion of the first main surface 12a, a portion of the second main surface 12b, a portion of the first side surface 12c, and a portion of the second side surface 12d. In this case, the second base electrode layer 32b is electrically connected to the second extension electrode portions 20b of the second internal electrode layers 16b.

The base electrode layer 32 includes at least one selected from a baked layer, a conductive resin layer, a thin film layer, or the like.

The following describes a case where the base electrode layer 32 is the above-mentioned baked layer, a case where the base electrode layer 32 is the above-mentioned conductive resin layer, and a case where the base electrode layer 32 is the above-mentioned thin film layer.

### (In the Case of Baked Layer)

The baked layer includes a metal component and glass. The metal component of the baked layer includes, for example, at least one selected from Cu, Ni, Ag, Pd, a Ag-Pd alloy, Au, or the like. The baked layer is formed by baking a conductive paste containing glass and the metal and applied to the multilayer body. The baked layer is formed by baking a conductive paste containing glass and the metal and applied to the multilayer body. The baked layer is formed by way of firing a multilayer chip including the internal electrode layers 16 and the dielectric layers 14 concurrently with the conductive paste applied to the multilayer chip. However, the baked layer may be formed by way of baking after the firing of the multilayer chip including the internal electrode layers 16 and the dielectric layers 14. The baked layer may include a plurality of layers.

Preferably, the first base electrode layer 32a on the first end surface 12e has, in its central portion in the height direction x, a thickness of, for example, about 10 µm or greater and about 150 µm or less in the length direction z connecting the first end surface 12e and the second end surface 12f.

Preferably, the second base electrode layer 32b on the second end surface 12f has, in its central portion in the height direction x, a thickness of, for example, about 10 µm or greater and about 150 µm or less in the length direction z connecting the first end surface 12e and the second end surface 12f.

Preferably, the first base electrode layer 32a on a portion of the first main surface 12a and a portion of the second main surface 12b has, in its central portion in the length direction z connecting the first end surface 12e and the second end surface 12f, a thickness of, for example, about 10 µm or greater and about 100 µm or less in the height direction x connecting the first main surface 12a and the second main surface 12b.

Preferably, the second base electrode layer 32b on a portion of the first main surface 12a and a portion of the second main surface 12b has, in its central portion in the length direction z connecting the first end surface 12e and the second end surface 12f, a thickness of, for example, about 10 µm or greater and about 100 µm or less in the height direction x connecting the first main surface 12a and the second main surface 12b.

Preferably, the first base electrode layer 32a on a portion of the first side surface 12c and a portion of the second side surface 12d has, in its central portion in the length direction z connecting the first end surface 12e and the second end surface 12f, a thickness of, for example, about 10 µm or greater and about 100 µm or less in the width direction y connecting the first side surface 12c and the second side surface 12d.

Preferably, the second base electrode layer 32b on a portion of the first side surface 12c and a portion of the second side surface 12d has, in its central portion in the length direction z connecting the first end surface 12e and the second end surface 12f, a thickness of, for example, about 10 µm or greater and about 100 µm or less in the width direction y connecting the first side surface 12c and the second side surface 12d.

### (In the Case of Conductive Resin Layer)

The conductive resin layer includes a first conductive resin layer and a second conductive resin layer.

Preferably, the first conductive resin layer is provided as the first base electrode layer 32a and covers another layer such as a baked layer. Preferably, the second conductive resin layer is provided as the second base electrode layer 32b and covers another layer such as a baked layer.

Specifically, it is preferable that the first conductive resin layer as the first base electrode layer 32a and the second conductive resin layer as the second base electrode layer 32b are respectively disposed on the other layers such as the baked layers respectively formed on the first end surface 12e and the second end surface 12f, and further extend over portions of the other layers such as the baked layers disposed on the first main surface 12a, the second main surface 12b, the first side surface 12c, and the second side surface 12d. Nevertheless, the first conductive resin layer and the second conductive resin layer may be disposed only on the other layers such as the baked layers on the first end surface 12e and the second end surface 12f.

Each of the first conductive resin layer and the second conductive resin layer preferably has a thickness of, for example, about 10 µm or greater and about 200 µm or less.

Each of the first conductive resin layer and the second conductive resin layer contains a thermosetting resin and a metal component.

Due to including the thermosetting resin, the first conductive resin layer and the second conductive resin layer are more flexible than the base electrode layer 32 that is composed of, for example, a plated film or a fired product of a conductive paste. For this reason, the conductive resin layers function as buffer layers, making it possible to prevent cracks from forming in the multilayer ceramic capacitor 10 even when a physical impact or an impact due to a thermal cycle is applied to the multilayer ceramic capacitor 10.

Specific examples of the thermosetting resin include various known thermosetting resins such as an epoxy resin, a phenol resin, a urethane resin, a silicone resin, a polyimide resin, and the like. Among them, the epoxy resin excellent in heat resistance, moisture resistance, adhesion, etc. is one of the most suitable resins.

The first conductive resin layer and the second conductive resin layer preferably contain a curing agent together with the thermosetting resin. In a case of using an epoxy resin as the base resin, various known compounds such as a phenol-based compound, an amine-based compound, an acid anhydride-based compound, an imidazole-based compound, and the like can be used as the curing agent for the epoxy resin.

As the metal contained in the first conductive resin layer and the second conductive resin layer, Ag, Cu, or an alloy thereof can be used. Alternatively, a metal powder having a surface coated with Ag can be used. Preferably, a Ag-coated Cu or Ni powder is used as the metal powder.

Alternatively, Cu subjected to an antioxidant treatment can be used. The reason for using the Ag-coated metal is that an inexpensive metal can be employed as the base material while the above-described characteristics of Ag are maintained.

The first conductive resin layer and the second conductive resin layer preferably contain the metal in an amount of 35 vol% or more and 75 vol% or less with respect to the total volume of the conductive resin.

The metal contained in the first conductive resin layer and the second conductive resin layer may have any shape without particular limitation. The conductive filler may have a spherical shape, a flat shape, or the like.

The metal contained in the first conductive resin layer and the second conductive resin layer may have any average particle diameter without particular limitation. The conductive filler may have an average particle diameter of, for example, about 0.3 µm or greater and about 10 µm or less.

The metal contained in the first conductive resin layer and the second conductive resin layer is mainly responsible for the electrical conductivity of the conductive resin layers. Specifically, the conductive filler particles in contact with each other form conduction paths in the conductive resin layers.

The metal contained in the first conductive resin layer and the second conductive resin layer may have a spherical shape, a flat shape, or the like, but it is preferable to use a mixture of a spherical metal powder and a flat metal powder.

Each of the first conductive resin layer and the second conductive resin layer may include a resin layer containing conductive particles and a thermosetting resin.

The conductive resin layers may be formed directly on the multilayer body without forming the baked layers.

### (In the Case of Thin Film Layer)

In the case where the base electrode layer 32 is formed as a thin film layer, the thin film layer is formed by a thin film forming method such as sputtering or a vapor deposition. The thin film layer is composed of deposited metal particles and has a thickness of 10 µm or less.

Next, the plating layer 34 disposed on the base electrode layer 32 will be described with reference to FIGS. 4 and 5. The plating layer 34 includes a first plating layer 34a and a second plating layer 34b.

The first plating layer 34a and the second plating layer 34b include, for example, at least one selected from Cu, Ni, Sn, Ag, Pd, a Ag-Pd alloy, Au, or the like.

The first plating layer 34a is disposed so as to completely cover the first base electrode layer 32a. The second plating layer 34b is disposed so as to completely cover the second base electrode layer 32b.

Each of the first plating layer 34a and the second plating layer 34b may be composed of a plurality of layers. In this case, each plating layer 34 preferably has a two-layer structure including a lower plating layer (Ni plating layer) constituted of Ni plating provided on the base electrode layer 32 and an upper plating layer (Sn plating layer) constituted of Sn plating provided on the lower plating layer. In other words, in this case, the first plating layer 34a includes a first lower plating layer and a first upper plating layer disposed on a surface of the first lower plating layer. Likewise, the second plating layer 34b includes a second lower plating layer and a second upper plating layer disposed on a surface of the second lower plating layer.

Each lower plating layer constituted of Ni plating is provided in order to prevent the base electrode layer 32 from being eroded by solder when the multilayer ceramic capacitor 10 is mounted, and each upper plating layer constituted of Sn plating is provided in order to facilitate the mounting of the multilayer ceramic capacitor 10 by improving solder wettability when the multilayer ceramic capacitor 10 is mounted.

Preferably, each of the lower plating layer and the upper plating layer has a thickness of 1.0 µm or greater and 15.0 µm or less.

As illustrated in FIG. 1, the dimension in the length direction z of the multilayer ceramic capacitor 10 including the multilayer body 12, the first external electrode 30a, and the second external electrode 30b is defined as a dimension L, the dimension in the height direction x of the multilayer ceramic capacitor 10 including the multilayer body 12, the first external electrode 30a, and the second external electrode 30b is defined as a dimension T, and the dimension in the width direction y of the multilayer ceramic capacitor 10 including the multilayer body 12, the first external electrode 30a, and the second external electrode 30b is defined as a dimension W. The multilayer ceramic capacitor 10 is designed such that the dimension L in the length direction z is 0.2 mm or more and 10.0 mm or less, the dimension W in the width direction y is 0.1 mm or more and 10.0 mm or less, and the dimension T in the height direction x is 0.1 mm or more and 5.0 mm or less. The dimensions of the multilayer ceramic capacitor 10 can be measured using a microscope.

Furthermore, in the multilayer ceramic capacitor 10, the relative permittivity of the dielectric particles is preferably 30 or more. This makes it possible to achieve a more remarkable effect of reducing the amount of displacement of the dielectric layers 14 at the time of application of a voltage to the multilayer ceramic capacitor 10.

According to the multilayer ceramic capacitor 10, the configuration in which the atomic ratio (Mn/Zr) of Mn to Zr in the dielectric particles is 0.60 or more and 0.80 or less makes it possible to ensure a suitable amount of Mn solid-solved in the interiors of the dielectric particles and to reduce the amount of Mn segregation at the grain boundaries between the dielectric particles, whereby the insulating properties of the overall dielectric layers are enhanced, allowing for improvement in the reliability of the multilayer ceramic capacitor.

### 2. Method of Manufacturing Multilayer Ceramic Capacitor

Next, a method of manufacturing the multilayer ceramic capacitor will be described.
(1) Dielectric sheets and an internal electrode layer-forming conductive paste are prepared. The dielectric sheets and the internal electrode layer-forming conductive paste contain a binder (e.g., a known organic binder) and a solvent (e.g., a known organic binder).
(2) Next, the internal electrode layer-forming conductive paste is printed in a predetermined pattern on the dielectric sheets by, for example, screen printing or gravure printing, thereby preparing the dielectric sheets having thereon a first internal electrode pattern corresponding to the first internal electrode layer and the dielectric sheets having thereon a second internal electrode pattern corresponding to the second internal electrode layer. Additionally, dielectric sheets devoid of printed internal electrode pattern are also prepared as outer layer-forming dielectric sheets.
(3) A predetermined number of outer layer-forming dielectric sheets devoid of printed internal electrode pattern are laminated together to form a portion to become the second outer layer portion, and the dielectric sheets having thereon the first internal electrode pattern and the dielectric sheets having thereon the second internal electrode pattern are sequentially laminated to form a portion to become the inner layer portion.
(4) A predetermined number of dielectric sheets devoid of printed internal electrode pattern are further laminated on the internal electrode pattern corresponding to the internal electrode layer on the outermost surface of the inner layer portion, thereby forming a portion to become the first outer layer portion. In this way, a multilayer sheet is produced.
(5) The multilayer sheet is pressed in the lamination direction by means of isostatic pressing or the like to produce a multilayer block.
(6) The multilayer block is cut into a predetermined size, thereby producing multilayer chips. In this step, the corners and ridges of the multilayer chips may be rounded by barrel polishing or the like. Through the foregoing steps, multilayer bodies are prepared.
(7) The multilayer chips are fired to produce the multilayer bodies 12. The firing temperature is preferably 900°C or higher and 1400°C or lower, although it depends on the ceramic and the materials of the internal electrode layers 16.
(8) Subsequently, the base electrode layers are formed. The base electrode layers are baked layers. A conductive paste containing a glass component and a metal component is prepared for each of the first base electrode layer and the second base electrode layer.
(9) The conductive paste is applied to the first end surface and the second end surface, which are the opposite end surfaces of the multilayer body 12, by a method such as dipping or screen printing, and then baking is performed to form the first base electrode layer and the second base electrode layer. The temperature of the baking in this step is preferably 700°C or higher and 900°C or lower.
(10) In a case where the base electrode layers are conductive resin layers, the conductive resin layers can be formed by the following method. The conductive resin layers may be formed on the surfaces of baked layers, or directly on the multilayer body as a single layer without forming the baked layers.

An example of the method of forming the conductive resin layers includes applying a conductive resin paste containing a thermosetting resin and a metal component to the baked layers or the multilayer body, and performing heat treatment at a temperature of 250°C or higher and 550°C or lower to thermally cure the resin, thereby forming the conductive resin layers. The heat treatment in this step is preferably performed in a N₂ atmosphere. Further, in order to prevent scattering of the resin and oxidation of various metal components, the oxygen concentration is preferably reduced to 100 ppm or less.

An Example of a method of applying the conductive resin paste includes applying the conductive resin paste by extruding the conductive resin paste through a slit or applying the conductive resin paste by roller transfer.

(11) If necessary, plating is provided on the surface of the base electrode layers to form a plating layer. In the present embodiment, two plating layers are formed over a surface of each of the first base electrode layer and the second base electrode layer. Specifically, a Ni plating layer is formed on the first base electrode layer and the second base electrode layer, and a Sn plating layer is formed on the Ni plating layer. The Ni plating layer and the Sn plating layer are sequentially formed by barrel plating, for example.

Here, a manufacturing method for achieving the feature of the present invention in which "an atomic ratio of Mn to Zr (Mn/Zr) in the dielectric particles is 0.60 or more and 0.80 or less" and the feature in which "the dielectric layers further contain at least La, and the content of La is set to 0.3 mol or more and 1.0 mol or less" will be described. La may be added at the time of preparing the dielectric raw material, or may be added later at the time of preparing the dielectric sheets. As a result of ingress of La into the A site, ingress of Mn into the B site is facilitated, so that the atomic ratio of Mn to Zr (Mn/Zr) changes in the dielectric particles.

In the above-described manner, the multilayer ceramic capacitor 10 according to the embodiment illustrated in FIG. 1 is manufactured.

### 3. Experimental Example

Next, in order to ascertain the effects of the multilayer ceramic capacitor according to the present invention described above, multilayer ceramic capacitors as test samples having different atomic ratios of Mn to Zr (Mn/Zr) were produced by the manufacturing method described above, and the reliability of the test samples was checked by way of the HALT and an experiment for measuring a percent coverage (%) by the internal electrode layers.

### (1) Specifications of the multilayer ceramic capacitors produced as Examples

Multilayer ceramic capacitors as test samples of Examples 1 to 3 were produced by the manufacturing method according to the above-described embodiment.
- Dimensions (design values) of the multilayer ceramic capacitor: L × W × T = 1.68 mm × 0.87 mm × 0.88 mm
- Ceramic materials: SrBaZrO₃ + La
- Capacitance: 100 nF
- Material for the internal electrode layers: Ni

### (2) Specifications of the multilayer ceramic capacitors produced as Comparative Examples

Multilayer ceramic capacitors as test samples of Comparative Examples 1 and 2 were produced by the manufacturing method according to the above-described embodiment. The test samples of Comparative Example 1 were prepared without adding La in Step (1) of the manufacturing method. The test samples of Comparative Example 2 were prepared by adding La in Step (1), and were maintained in a low oxygen atmosphere at a high temperature for 2 hours in Step (7) of the manufacturing method.
- Dimensions (design values) of the multilayer ceramic capacitor: L × W × T = 1.68 mm × 0.87 mm × 0.88 mm
- Ceramic material: SrBaZrO₃
- Capacitance: 100 nF
- Material for the internal electrode layers: Ni The specifications other than the above were the same as those of the sample of the Examples.

### (3) Measurement Method by HALT

In the HALT, the samples, each of which was individually set on a dedicated jig, were placed into a high-temperature bath at a temperature of 150[°C], and were maintained there with a direct current of 100 [V] applied across the pair of external electrodes for 100 hours. After the test, those having a Log IR value of 10th power or more were evaluated as "O" (good), those having a Log IR value of more than 8th power and less than 10th power were evaluated as "Δ" (fair), and those having a Log IR value of 8th power or less were evaluated as "X" (poor).

### (4) Method of measuring percent coverage (%) by internal electrode layers

In the central portion in the T direction of the multilayer body, a percent coverage of the dielectric layer by the first and second internal electrode layers was measured by the following method. First, the internal electrode layers and the dielectric layers located in the central portion in the T direction of the multilayer body were peeled off by electric field peeling or the like. Next, a portion at and around the center (a position at 1/2 in the W direction and 1/2 in the L direction) of the exposed internal electrode was observed at a magnification of about 100 times using a microscope. The obtained image is then analyzed to determine a proportion of an area occupied by the internal electrode layer with respect to the exposed portion. The samples in which the percent coverage by the internal electrode layer was 80.0% or more were evaluated as "O" (good), and the samples in which the percent coverage by the internal electrode layer was less than 80% were determined as "X" (poor).

### (5) Comprehensive Assessment

The samples for which the result of the HALT and the percent coverage (%) by the internal electrode layers were both evaluated as "O" (good) were assessed to be "O" (good), and the samples for which either of them was evaluated as "Δ" (fair) or "X" (poor) were assessed to be "X" (poor) in the comprehensive assessment.

### (6) Results

Table 1 shows the results of the HALT (Log IR values), the evaluation by the HALT, the percent coverage (%) by the internal electrode layers, the evaluation of the percent coverage by the internal electrode layers, and the comprehensive assessment for each of the test samples of the multilayer ceramic capacitors of Examples 1 to 3 and Comparative Examples 1 and 2.

**[Table 1]**

| | Atomic ratio (Mn/Zr) | HALT | Evaluation by HALT | Percent coverage by internal electrode layers | Evaluation of percent coverage by internal electrode layers | Comprehensive assessment |
|---|---|---|---|---|---|---|
| Example 1 | 0.6 | 10.08 | ○ (good) | 83.3 | ○ (good) | ○ (good) |
| Example 2 | 0.7 | 10.11 | ○ (good) | 82.7 | ○ (good) | ○ (good) |
| Example 3 | 0.8 | 10.14 | ○ (good) | 83 | ○ (good) | ○ (good) |
| Comparative example 1 | 0.3 | 4.2 | X (poor) | 84.3 | ○ (good) | X (poor) |
| Comparative example 2 | 1.5 | 8.9 | Δ (fair) | 63.1 | X (poor) | X (poor) |

As shown in Table 1, the test samples of Examples 1 to 3 had a Log IR value of 10 or more in the HALT, and accordingly, were evaluated as "O" (good) in respect of the HALT.

Further, the test samples of Examples 1 to 3 had a percent coverage of 80% or more by the internal electrode layers, and accordingly, were evaluated as "O" (good) in respect of the percent coverage by the internal electrode layers.

On the other hand, the test samples of Comparative Example 1 had a Log IR value of 8 or less in the HALT, and accordingly, were evaluated as "X" (poor) in respect of the HALT. The test samples had a percent coverage of 80% or more by the internal electrode layers, and accordingly, were evaluated as "O" (good) in respect of the percent coverage by the internal electrode layers.

The test samples of Comparative Example 2 had a Log IR value from 8 to 10 in the HALT, and accordingly, were evaluated as "Δ" (fair) in respect of the HALT. The test samples had a percent coverage of less than 80% by the internal electrode layers, and accordingly, were evaluated as "X" (poor) in respect of the percent coverage by the internal electrode layers.

Therefore, in the comprehensive assessment, the test samples of Examples 1 to 3 were assessed to be "O" (good), whereas the test samples of Comparative Examples 1 and 2 were assessed to be "X" (poor).

The results described above suggest that, in the present invention, the configuration in which the atomic ratio of Mn to Zr (Mn/Zr) in the dielectric particles is 0.60 more and 0.80 or less makes it possible to ensure a suitable amount of Mn solid-solved in the dielectric particles and to reduce an amount of Mn segregation at the grain boundaries between the dielectric particles, whereby the insulating properties of the overall dielectric layers are enhanced, allowing for improvement in the reliability of the multilayer ceramic capacitor.

It should be noted that the present invention is not limited to the embodiments disclosed above.

In other words, various modifications can be made to the above-described embodiments in terms of the mechanism, the shape, the material, the quantity, the position, the arrangement, and the like without departing from the technical idea and the object of the present invention, and these modifications are encompassed in the scope of the present invention.

### EXPLANATION OF REFERENCE NUMERALS

10 Multilayer ceramic capacitor
12 Multilayer body
12a First main surface
12b Second main surface
12c First side surface
12d Second side surface
12e First end face
12f Second end surface
14 Dielectric layer
15a Inner layer portion
15b1 First outer layer portion
15b2 Second outer layer portion
16 Internal electrode layer
16a First internal electrode layer
16b Second internal electrode layer
16c Floating internal electrode layer
18a First counter electrode portion
18b Second counter electrode portion
20a First extension electrode portion
20b Second extension electrode portion
22a Side portion
22b End portion
26c Counter electrode portion
30 External electrode
30a First external electrode
30b Second external electrode
32 Base electrode layer
32a First base electrode layer
32b Second base electrode layer
34 Plating layer
34a First plating layer
34b Second plating layer
x Height direction (lamination direction)
y Width direction
z Length direction

## Claims

1. A multilayer ceramic capacitor, comprising:
a multilayer body including a plurality of dielectric layers that are laminated, the multilayer body having a first main surface and a second main surface opposed to each other in a lamination direction of the plurality of dielectric layers, a first side surface and a second side surface opposed to each other in a width direction orthogonal to the lamination direction, and a first end surface and a second end surface opposed to each other in a length direction orthogonal to the lamination direction and the width direction;
first internal electrode layers respectively disposed on the plurality of dielectric layers and exposed at the first end surface;
second internal electrode layers respectively disposed on the plurality of dielectric layers and exposed at the second end surface;
a first external electrode including a base electrode layer disposed on the first end surface, and a plating layer disposed on the base electrode layer on the first end surface; and
a second external electrode including a base electrode layer disposed on the second end surface, and a plating layer disposed on the base electrode layer on the second end surface, wherein
the dielectric layers comprise dielectric particles arranged therein,
the dielectric particles comprise Mn and Zr, and
an atomic ratio of Mn to Zr (Mn/Zr) in the dielectric particles is 0.60 or more and 0.80 or less.

2. The multilayer ceramic capacitor according to claim 1, wherein the dielectric particles in the dielectric layers have a perovskite structure further including Ba, Sr, Zr, Ti, and Hf and optionally including Ca, and further comprise at least one of Mn or Si.
